# EUROPEAN PATENT APPLICATION

(11) **EP 1 977 656 A2**
(43) Date of publication of application: **08.10.2008**
(21) Application number: 06847059.0
(22) Date of filing: 21.11.2006
(51) Int. Cl.: A43B 13/18, A43B 17/02, A47C 27/08, A61G 7/057, F16K 17/18

(54) **SHEET WITH VALVE-CONTROLLED PRESSURE SYSTEM**

(30) Priority: 24.11.2005 ES 200503063; 12.06.2006 ES 200601693
(71) Applicant: Chasco Pérez de Arenaza, Juan Carlos, E-31010 Pamplona (Navarra) (ES)
(72) Inventor: Chasco Pérez de Arenaza, Juan Carlos, E-31010 Pamplona (Navarra) (ES)
(74) Representative: Gislon, Gabriele
(86) International application number: PCT/ES2006/000645
(87) International publication number: WO 2007/060273

(57) **Abstract**

The invention relates to a sheet with a valve-controlled pressure system, having flexible cavities which are interconnected by means of valve devices which have an internal pressure that is greater than that of the flexible cavities surrounding same. When the pressure in any of the flexible cavities exceeds the known internal pressure of the valve devices with which it is interconnected, a fluid passes from said flexible cavity to the adjacent cavities, thereby balancing the pressure of the support. The invention is provided with an alarm and an external system for adjusting the pressures of the valve devices. The invention is mainly intended to be used as a support for feet in general and for diabetic feet, as a seat and to prevent external system for adjusting the pressures.

## Description

### Object of the Invention

As described in the title of this specification, the present invention relates to the improvement of a flexible sheet having cavities which are interconnected by means of valve devices adapting their pressures to the skin of their owner.

### Brief Description of the Invention

A correct distribution of pressures in the soles of feet is usually temporary, due to the easy occurrence of calluses, helomas, bone disorders, etc.

There are other extreme pathologies such as the decrease and even the elimination of the sensitivity in the sole of feet as occurs in sole diabetic neuropathy.

In non-sole pathologies, decubitus ulcers which usually occur in patients confined to bed for a long time and who are more or less conscious are emphasized.

This laminated device having flexible cavities, which are interconnected by valve instruments with an internal pressure that is greater than that of the mentioned cavities, allows redistributing the pressures, thus for example in the soles of feet, and partly palliating the previously described pathologies.

A number of elastic sheets provide support and comfort to the foot, but the areas of the foot having anomalies and deformations always receive an excessive and repeated impact caused by the continuous resistance of said sheets and of the shoes, until such sheets are deformed by regular use, with the subsequent increase of the pathology for the sole of the foot; this elastic sheet is molded and adapted to said pressures from the beginning, redistributing and adapting the volumes in its cavities and also improving the stability of the foot, it furthermore provides simplicity and efficiency with respect to the other sheets existing on the market. This PCT invention patent application also includes patent applications ES200503063 and ES200601693.

### Description of the Invention

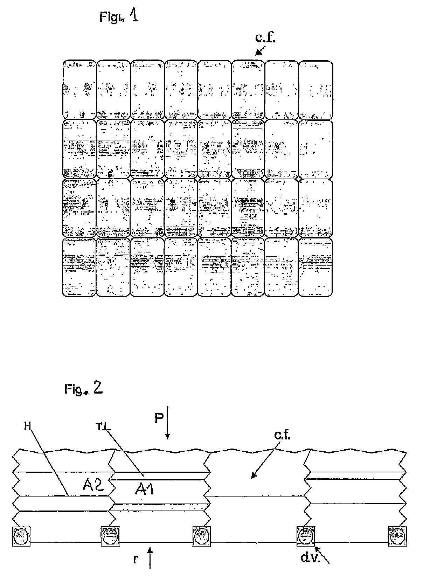

The device of this invention is a flexible sheet, Figures 1 and 2, having adjacent cavities (c.v.) A and B which are interconnected by means of valve elements (d.v.) which have a known internal pressure.

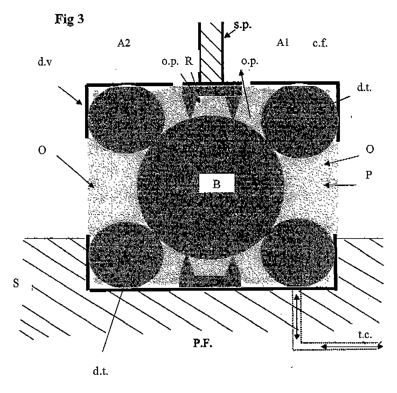

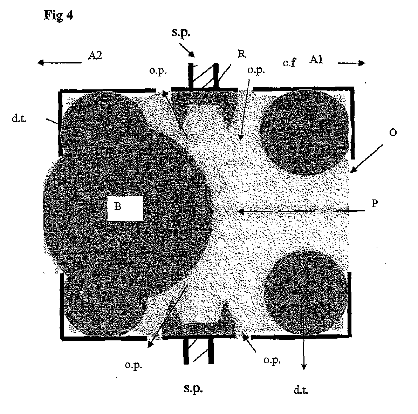

The internal pressures of the flexible cavities (c.v.) are less than the internal resistance or pressure of the valve devices (d.v.) upon the passage of a pressurized fluid. An external pressure (P) on a cavity which exceeds the internal resistance or pressure of adjacent valve devices allows the passage of the fluid from said cavity to the adjacent cavities, such that the insole, Figures 3 and 4, will adapt the volume of its flexible chambers to the higher or lower pressure impinging on them and exceeding the valve resistance or pressure established in the valve devices (d.v.) interconnecting them.

The flexible areas of the valve sheet receiving intense pressures will sink and the surrounding areas which normally have a larger surface area and receive lower pressures will rise, providing stability to the foot.

The valve devices are usually partially submersed in the outsole (S) almost up to the height of the entrance and exit orifices (O) and also completely submersed in said outsole, with an air intake from the chambers to the entrance orifices of the valve devices.

A valve cavity has: A ball which is supported and is retained with a certain pressure by a normally threaded ring (R), on the sides there are two toroidal devices (d.t.) of elastomeric material or of a tube with internal fluid which make contact with said ball in its entire circumference. Figure 3.

When the pressure in one of the cavities (c.v.) increases due to the support of the sole while walking, the ball (B) is moved in the opposite direction, coming out of the ring retaining it in the central shaft, which is usually threaded, thrusting the toroidal device, overcoming its elastic resistance when said thrust is sufficient, the air can leave through the small upper or also side orifices (o.p.), Figures 3 and 4.

Upon lifting the foot from the ground in said walk, said pressure disappears and the air pressure of the chamber which has received the air plus the elastic thrust of the toroidal device forces the ball to return to its point of equilibrium in the area of the retaining ring or central shaft, since it cannot exceed the elastic resistance of the opposite toroidal device.

The pressures exceeding the "critical" toroidal elastic resistance in the different cavities will thus allow the fluid to be distributed among the different chambers. This adjustment of the insole having cavities to the sole of the foot after a number of steps will mainly depend on the local pressures and the entrance and exit diameters of the orifices of each valve.

If the toroidal device (d.t.) is occupied by a fluid, the latter can be captive or depend on a connecting tube (t.c.) which ends alone or as a group in a cavity with fluid, the pressure of which is regulated by an external valve or adjusting screw according to the adjustment pressure from the outsole or on the sides of the outsole.

The cavities (c.v.) subjected to excessive pressure are compensated with the cavities with lower pressure, the sheet, Figure 4, having cavities being adapted to the sole of the foot, for example.

The internal pressure of the valve devices is also adjusted by means of an external action to the flexible sheet having cavities, thus, Figure 3: varying the internal pressure inside the toroidal devices (d.t.) acting between the entrance and exit of the fluid.

The material forming the cavities is flexible and elastic or at least adaptable to the pressure and volume modifications of the cavities (c.v.).

The valve devices (d.v.) are generally far from the area of action of the pressures (P) (Example: From the sole of the foot.).

The instruments modifying the value of the pressures inside the valve devices are housed in a place that does not hinder the pressure task (thus, for a foot: in the outsole, heel or in an external place).

The distribution of the valve devices, their internal pressures, the distribution of the flexible cavities, as well as the surface area and volume thereof can be varied and adapted to the different support areas, where the external pressures (P) thus act, Figure 1 and 2.

The flexible cavities with valve devices can be distributed in layers at different heights.

The valve devices (d.v.), Figure 3, are usually adjacent to the flexible cavities (c.v.), but can also be far from their connections with the flexible cavities.

The amount of valve devices arranged between the different flexible cavities is variable. The thickness of the sheet can be varied according to the area and pressure to be measured.

The device is provided with an alarm element, in case the faces of the chambers make contact with one another or break, further assessing the frequency of contact of the chambers with one another. The information leaves the integrated circuit through a conductor system or radially. A specific alarm device or frequency measuring device is not claimed.

The flexible valve sheet has a system with aeration, no specific one is claimed.

### Drawings

The drawings which are shown are only an example of what a sheet with a valve-controlled pressure system, abbreviated as (L.P.V.), represents:
Figure 1: Upper view of an assembly of flexible cavities (c.f.).
Figure 2: Profile of several flexible cavities (c.f.) which are interconnected by a valve device (d.v.) with an area of pressure action (P) and an area of resistance to the pressure action (r). Threads (H) or laminated strips (T.L.) making contact with the inner faces of the flexible cavities, preventing the space between said faces from increasing.
Figure 3: Profile (P.F.) of the instrument or valve device (d.v.) with a more or less rigid ball (B) and orifices (O) for the entrance of the fluid against a known pressure or resistance, Toroidal devices (d.t). Small entrance holes (o.p.). Outsole (S). Cavities (c.v.) A and B separated by (s.p.), Threaded support shaft (R). Toroidal device feeding system (t.c.) with an external chamber for the fluid feeding the toroidal device, common to several flexible cavities or for a single one of them, which is not shown in the figure. The internal pressure in the toroidal devices is modified from the outside by means of a threaded screw acting by pressing in said chamber.
Figure 4: Upper view of the valve device (d.v.) having flexible cavities connecting it. Cavities separated by a double sheet (s.p.) A and B. With entrance orifices for the fluid (O) at a pressure (P). Threaded support ring (R). Ball after the pressure action of the chamber (B) moved to the entrance orifice, allowing the fluid to leave through the small orifices (o.p.). Toroidal device (d.t.), the elastic pressure or resistance of which has been overcome by the ball (B) due to the action of the pressure of the fluid.

### Description of the Preferred Invention

The device of this invention is a flexible sheet, Figures 1 and 2, having adjacent cavities (c.v.) A and B which are interconnected by means of valve elements (d.v.) which have a known internal pressure.

The internal pressures of the flexible cavities (c.v.) are less than the internal resistance or pressure of the valve devices (d.v.) upon the passage of a pressurized fluid. An external pressure (P) on a cavity exceeding the internal resistance or pressure of the adjacent valve devices allows the passage of the fluid of said cavity to the adjacent cavities, such that the insole, Figures 3 and 4, will adapt the volume of its flexible chambers to the higher or lower pressure impinging on them and exceeding the valve resistance or pressure established in the valve devices (d.v.) interconnecting them.

The flexible areas of the valve sheet receiving intense pressures will sink and the surrounding areas which normally have a larger surface area and receive lower pressures will rise, providing stability to the foot.

The valve devices are usually partially submersed in the outsole (S) almost up to the height of the entrance and exit orifices (O) and also completely submersed in said outsole, with an air intake from the chambers to the entrance orifices of the valve devices.

A valve cavity has: A ball which is supported and is retained with a certain pressure by a normally threaded ring (R), on the sides there are two toroidal devices (d.t.) of elastomeric material or of a tube with internal fluid which make contact with said ball in its entire circumference. Figure 3.

When the pressure in one of the cavities (c.v.) increases due to the support of the sole while walking, the ball (B) is moved in the opposite direction, coming out of the (threaded or non-threaded) ring retaining it and thrusting the toroidal device, overcoming its elastic resistance when said thrust is sufficient, the air can leave through the small upper or also side orifices (o.p.), Figures 3 and 4.

Upon lifting the foot from the ground in said walk, said pressure disappears and the air pressure of the chamber which has received the air plus the elastic thrust of the toroidal device forces the ball to return to its point of equilibrium between the area of the central retaining ring, since it cannot exceed the elastic resistance of the opposite toroidal device.

The pressures exceeding the "critical" toroidal elastic resistance in the different cavities will thus allow the fluid to be distributed among the different chambers. This adjustment of the insole having cavities to the sole of the foot after a number of steps will mainly depend on the local pressures and the entrance and exit diameters of the orifices of each valve.

If the toroidal device (d.t.) is occupied by a fluid, the latter can be captive or depend on a connecting tube (t.c.) which ends alone or as a group in a cavity with fluid, the pressure of which is regulated by an external valve or adjusting screw according to the adjustment pressure from the outsole or on the sides of the outsole.

The cavities (c.v.) subjected to excessive pressure are compensated with the cavities with lower pressure, the sheet, Figure 4, having cavities being adapted to the sole of the foot, for example.

The internal pressure of the valve devices is also adjusted by means of an external action to the flexible sheet having cavities, thus, Figure 3: varying the internal pressure inside the toroidal devices (d.t.) acting between the entrance and exit of the fluid.

The material forming the cavities is flexible and elastic or at least adaptable to the pressure and volume modifications of the cavities (c.v.).

The valve devices (d.v.) are generally far from the area of action of the pressures (P) (Example: From the sole of the foot.).

The instruments modifying the value of the pressures inside the valve devices are housed in a place that does not hinder the pressure task (thus, for a foot: in the outsole, heel or in an external place).

The distribution of the valve devices, their internal pressures, the distribution of the flexible cavities, as well as the surface area and volume thereof can be varied and adapted to the different support areas, where the external pressures (P) thus act, Figure 1 and 2.

The flexible cavities with valve devices can be distributed in layers at different heights.

The valve devices (d.v.), Figure 3, are usually adjacent to the flexible cavities (c.v.), but can also be far from their connections with the flexible cavities.

The amount of valve devices arranged between the different flexible cavities is variable. The thickness of the sheet can be varied according to the area and pressure to be measured.

The device is provided with an alarm element, in case the chambers make contact with one another or break, further assessing the frequency of contact of the faces of the chambers with one another. The information leaves the integrated circuit through a conductor system or radially. A specific alarm device or frequency measuring device is not claimed.

The flexible valve sheet has a system with aeration, no specific one is claimed.

This patent application also describes as a novelty:

The flexible cavities also have threads or laminated strips between their internal walls, limiting the opposite walls making contact at their ends from increasing the space separating them. The space variation generally occurs in the upward direction.

The side walls of the flexible cavities are formed by one or more sheets.

## Claims

1. The device of this invention is an elastic sheet formed by adjacent flexible cavities which are interconnected by means of valve instruments: It is **characterized**: A. The known internal resistance of the valve instruments upon the passage of a fluid is greater than the internal pressure of the adjacent flexible chambers interconnected by said fluid. B. An external pressure on one of the flexible cavities which exceeds said internal pressure or resistance of the connecting valve instruments allows the passage of the fluid from said flexible cavity to its adjacent cavities. C. The flexible chambers receiving a certain pressure decrease their volume. D. The chambers adjacent to the previous chambers which do not reach said pressure increase their volume.

2. According to claim 1. The valve device is in the form of a cavity separating two chambers with opposite entrance orifices, one at each end of the cavity.

3. According to claim 2. It has a central ball with a known hardness, which is supported on a central support ring retaining it in its entire circumference with a known pressure or resistance.

4. According to claim 3. On both sides of the ball there are two toroidal devices with which the ball makes contact and presses in its entire circumference.

5. According to claim 4. The air entrance orifices in said cavity are surrounded by the internal area of the toroidal device.

6. According to claim 5. The small air exit orifices are arranged in the peripheral area of the toroidal devices and on each side of the central support shaft.

7. According to claim 6. The internal pressure of the toroidal devices is adjustable from the outside.

8. According to claim 7. The surface area and volume of the flexible cavities as well as the pressure in the toroidal devices can be varied according to the area and pressure to be supported by the flexible chambers.

9. According to claim 8. The flexible cavities have threads between their internal walls, limiting the walls having them at their ends from increasing the space separating them.

10. According to claim 9. The flexible cavities have laminated strips between their internal walls, limiting the walls having them at their ends from increasing the space separating them.
